# FASCICULE DE BREVET EUROPEEN

(11) **EP 2 188 745 B1**
(45) Date de publication et mention de la délivrance du brevet: **19.12.2018**
(21) Numéro de dépôt: 08836200.9
(22) Date de dépôt: 11.09.2008
(51) Int. Cl.: G06F 17/30

(54) **PROCÉDÉ D'INTERROGATION D'UNE BASE DE DONNÉES ET DISPOSITIF D'INTERROGATION**
VERFAHREN ZUM ABFRAGEN EINER DATENBANK UND ABFRAGEVORRICHTUNG
METHOD OF INTERROGATING A DATABASE AND INTERROGATION DEVICE

(30) Priorité: 11.09.2007 FR 0757494
(43) Date de publication de la demande: 26.05.2010
(73) Titulaire: ENABLON, 92400 Courbevoie (FR)
(72) Inventeur: VOGEL, Marc, 92420 Vaucresson (FR); VOGEL, Dan, 92420 Vaucresson (FR)
(74) Mandataire: Lavoix
(86) Numéro de dépôt international: PCT/FR2008/051626
(87) Numéro de publication internationale: WO 2009/044086

(56) Documents cités:
- US-A- 5 519 859
- US-A- 5 895 465
- US-A1- 2002 184 225
- US-A1- 2004 010 507

## Description

La présente invention concerne un procédé d'interrogation ou de modification d'une base de données.

De nos jours, les bases de données sont utilisées pour stocker un très grand nombre de données issues de sources multiples. Il est connu que ces données soient stockées dans des tables comportant chacune plusieurs champs, ces tables étant définies par le modèle de données. Des relations sont établies et mémorisées dans la base de données entre les champs des différentes tables.

Afin d'obtenir les données recherchées dans une base de données, il est connu d'utiliser un langage de requête permettant une interrogation de la base de données. Ainsi, une requête permet notamment d'obtenir le contenu de certains champs de certaines tables, ceci en fonction de critères prédéterminés qui sont couramment définis dans des filtres.

Un langage utilisé couramment pour interroger une base de données est le langage SQL. La syntaxe de ce langage permet l'extraction de données provenant de sources multiples, de les filtrer et de les recompiler en fonction de critères de recherche et des relations entre les tables, notamment pour les ordonner dans un tableau à deux dimensions.

Le langage SQL comporte de multiples mots clés afin de réaliser une ou plusieurs de ces actions dans le cadre d'une même requête.

Ce langage est extrêmement puissant mais est réservé à des utilisateurs avertis ayant une très bonne maîtrise du langage. En particulier, afin de formuler une requête, il est nécessaire, conformément au langage SQL, de préciser les champs pour lesquels des données sont recherchées, les tables contenant ces champs, les filtres mis en oeuvre, ainsi que les relations entre les tables contenant les différents champs, tels que définis dans la base.

L'usage de ces requêtes est délicat et l'invention a pour but de proposer un procédé et des moyens de requête d'une base de données permettant d'accéder plus simplement aux données contenues dans la base.

Le document US 2004/010507 A1 décrit un logiciel apte à identifier les clés étrangères et primaires dans une première requête non-SQL et à générer automatiquement une seconde requête SQL, incluant les jointures adaptées qui mettent en relation tables cibles et tables de base. Plus précisément, la première requête comporte un premier paramètre correspondant à une table de base et des paramètres supplémentaires correspondant à différents champs de la base de données. La jointure entre la table de base et une table cible est exprimée de manière implicite dans une syntaxe de la forme : « look-up field : looked-up field ». Le document US 2004/010507 A1 étend son enseignement sur les jointure au cas des filtres.

L'invention a pour objet un procédé et une installation d'interrogation ou de modification d'une base de données conformes aux revendications annexées.

L'invention sera mieux comprise à la lecture de la description qui va suivre, donnée uniquement à titre d'exemple et faite en se référant aux dessins, sur lesquels :
- la figure 1 est une vue schématique d'une installation de gestion de base de données ; et
- la figure 2 est un organigramme du procédé d'interrogation mis en oeuvre.

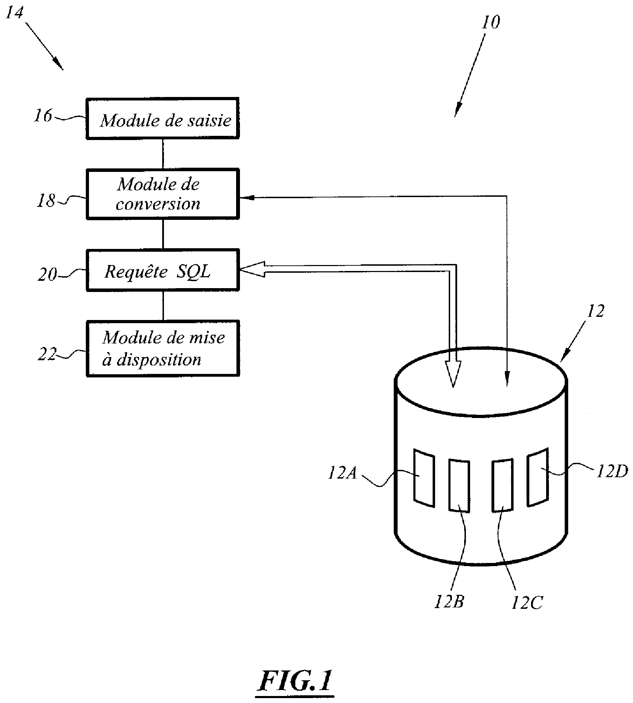

Sur la figure 1 est illustré un dispositif 10 d'interrogation de base de données comportant une base de données 12 et des moyens 14 d'interrogation de la base de données. Ces moyens d'interrogation sont formés par exemple d'un ordinateur mettant en oeuvre des logiciels adaptés.

En particulier, les moyens d'interrogation comportent un module de saisie 16 constitué par exemple d'un clavier et d'un éditeur de requête permettant la formulation de requêtes suivant un format prédéfini. L'interrogation peut également être effectuée sans intervention humaine dans le cadre de l'exécution d'un programme informatique.

Ils comportent en outre un module de conversion 18 connecté au module de saisie pour recevoir les requêtes formulées. Le module de conversion 18 est relié à la base de données 12 par une liaison permettant notamment la connaissance par le module de conversion des relations entre les champs des différentes tables de la base de données tels que celles-ci sont définies dans le modèle de données.

Les moyens de conversion 18 sont propres à retranscrire une requête initiale saisie depuis le module 14 suivant un format initial en une requête SQL complète ayant un format conforme au langage SQL en tenant compte du contenu de la requête initiale et des relations recueillies dans la base entre les champs des différentes tables de la base de données.

Les moyens d'interrogation 14 comportent un module logiciel d'interrogation de la base 12 à partir de requêtes SQL. Ce module est désigné par requêteur SQL. Ce module est propre à recevoir des requêtes formulées au format SQL issues du module de conversion 18 et à extraire de la base de données 12 les données correspondant aux requêtes.

Enfin, les moyens 14 comportent un module 22 de mise à disposition des données recueillies en réponse aux requêtes SQL formulées. Il s'agit par exemple d'un écran d'affichage de l'ordinateur ou de moyens de sauvegarde des données extraites.

La base de données 12 comporte comme connu en soi un ensemble de tables 12A, 12B, 12C, 12D, par exemple au nombre de quatre. Chaque table comporte un ensemble de champs. Certains champs des différentes tables sont reliés entre eux par des relations encore désignées couramment par « jointures ».

Par exemple, les quatre tables sont respectivement "Clients", "Entreprises", "Produits", et "Achats".

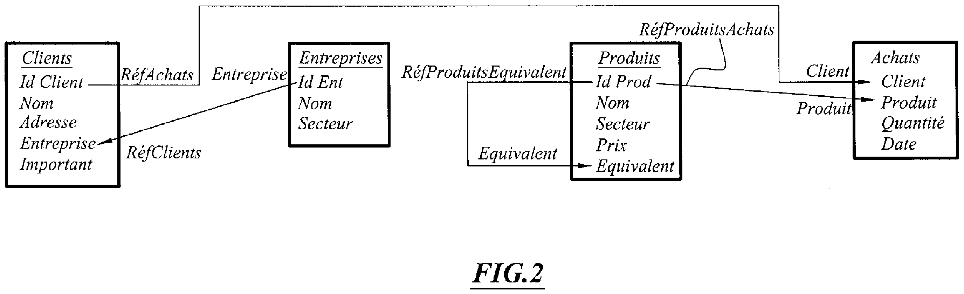

Les quatre tables contiennent les champs indiqués ci-dessous et sont telles qu'illustrées sur la figure 2.

### Table Clients :

*IdClient* : identifiant du client et clé de la table
*Nom* : Nom du client
*Adresse* : Adresse de l'entreprise
*Entreprise* : référence à l'identifiant noté IdEnt de l'entreprise à laquelle appartient le client, cet identifiant étant le premier champ de la table Entreprises.
*Important* : contient Oui ou Non selon l'importance d'un client

### - Table Entreprises :

*IdClient* : identifiant de l'entreprise et clé de la table
*Nom* : Nom de l'entreprise
*Secteur* : Secteur d'activité de l'entreprise (Bâtiment ou informatique par exemple).

### - Table Produits proposant une liste de produits

*IdProd* : identifiant du produit et clé de la table
*Nom* : Nom du produit
*Secteur* : Secteur d'activité auquel se destine ce produit.
*Prix* : Prix du produit
*Equivalent* : référence à autre produit noté IdProd équivalent à celui-ci

### - Table Achats contenant la liste des achats réalisés par un client.

*Client* : référence au client noté IdClient
*Produit* : référence au produit acheté noté IdProd
*Quantité* : nombre de produits achetés
*Date* : Date de l'achat.

Dans l'exemple considéré, les relations suivantes ont été définies entre les champs des tables. Ces relations peuvent être établies en consultant le modèle de données de la base de données. Les relations sont nommées pour pouvoir être explicitement référencées. Ainsi, pour la suite dès lors qu'il est fait référence à la relation en partant de son coté valeur unique (clé) et en allant vers le coté valeur multiple (clé étrangère) le nom de la relation est mentionné tel qu'il a été mentionné dans la base de données lors de la création de cette relation. A l'inverse pour décrire la relation dans le sens valeur multiple vers valeur unique, pour simplifier les écritures il est fait référence au nom du champ de départ car dans ce cas il ne peut y avoir d'ambiguïté.

Les relations sont au nombre de 4 et sont définies ci-dessous :
- Le champ Entreprise de la table Clients et le champ IdEnt de la table Entreprises constituent une relation (plusieurs à 1) : Cette relation est nommée *RefClients* en partant de la table Entreprises et l'écriture *Entreprise* (comme le champ) est utilisée en partant de la table Clients.
- Le champ Client de la table Achats et le champ IdClient de la table Clients constituent une relation (plusieurs à 1) : Cette relation est nommée *RefAchats* en partant de la table Clients et l'écriture *Client* (comme le champ) est utilisée en partant de la table Achats.
- Le champ Produit de la table Achats et le champ IdProd de la table Produits constituent une relation (plusieurs à 1) : Cette relation est nommée *RefProduitsAchats* en partant de la table Produits et l'écriture *Produit* (comme le champ) est utilisée en partant du côté de la table Achats.
- Le champ Equivalent de la table Produits et le champ IdProd de la table Produits constituent une relation (plusieurs à 1) : Cette relation est nommée *RefProduitsEquivalent* en partant de la table Produits et l'écriture *Equivalent* (comme le champ) est utilisée en partant du champ Equivalent.

Le module de saisie 16 est tel que, pour chaque interrogation, trois types de variables d'interrogation doivent être renseignées, à savoir : Table, Champ, Filtre.

Le premier type de variable "Table" est une table privilégiée de la base de données. Celle-ci doit être impérativement définie. Cette table est unique bien qu'elle puisse changer pour chaque interrogation. Même si l'interrogation effectuée vise à extraire des données dans plusieurs tables, seule une table privilégiée est saisie dans le module de saisie. Il est à noter que cette table privilégiée peut être implicite et il n'est pas toujours nécessaire de la renseigner car elle peut être déduite du contexte. En effet, on peut imaginer qu'une personne ou un programme qui consulte des données d'une table souhaite utiliser le procédé décrit dans cette invention afin de réduire la quantité d'informations consultées.

Le deuxième type de variable d'interrogation "Champs" est constitué des champs pour lesquels des données sont recherchées. Ces champs peuvent être des champs de la table privilégiée ou des champs d'autres tables de la base de données, même si ceux-ci ne font pas partie de la table privilégiée précédemment saisie.

Enfin, le troisième type de variable d'interrogation "Filtre" est constitué d'un filtre définissant des conditions auxquelles doivent satisfaire les données dans les champs prédéfinis pour que celles-ci soient renvoyées en réponse à la requête.

Parmi les variables d'interrogation ne figurent ni les jointures représentatives des relations existant entre les champs des tables utilisées pour en extraire des données ni les tables autres que la table privilégiée dans lesquelles des données doivent être extraites par la requête.

Le module de conversion 18 est tel que, par analyse des seules variables d'interrogation saisies depuis le module de saisie 16, et à partir de la connaissance, par le module de conversion 18, du modèle de données donnant les relations entre les champs de tables, les champs de "jointure" représentatifs des relations existant entre les champs des tables sont établis par le module de conversion 18 et sont réintroduits dans des requêtes SQL adressées ultérieurement au requêteur SQL 20. De même, les tables dans lesquelles des données doivent être extraites autres que la table privilégiée sont aussi établies et réintroduites dans les requêtes SQL.

En l'absence de relation entre les champs des tables devant être interrogées, le module de conversion 18 assure seulement une conversion des trois types de variables d'interrogation dans une requête suivant une syntaxe de requêtes SQL de format prédéterminé de la forme :
**SELECT** *champs des données recherchées* **FROM** tables où les champs existent **WHERE** *jointures* + *conditions*

Par exemple, dans les cas suivants, le module de conversion 18 assure la conversion de la requête saisie en une requête SQL sous la forme explicitée ci-dessous.

Pour le renvoi des Noms et Adresses des clients de la société "MaSociété" :
∘ Requête saisie
   Table : Clients,
   Champs : Nom , Adresse
   Filtre : Entreprise = "MaSociete"
∘ Requête SQL

SELECT Nom, Adresse FROM Clients WHERE Entreprise = "MaSociete" Dans ce cas où une seule table est consultée et donc aucune relation n'est exploitée, l'intérêt de la saisie et de la conversion n'apparaît pas encore.

Par ailleurs, le module de saisie 16 est propre à recevoir, dans le cas d'une relation « plusieurs à 1 » une expression formée du champ de la table de départ noté « champsource » et d'un champ de la table d'arrivée noté « champdestination » sous la forme « champsource.champdestination ». Le module de conversion 18 est adapté pour indiquer explicitement la jointure correspondante à partir de la connaissance du modèle de données lors de la détection d'une forme du type « champsource.champdestination » dans une requête saisie.

Pour le renvoi des Nom et Adresse des clients ainsi que le secteur d'activité des entreprises correspondantes :
∘ Requête saisie
   Table : Clients
   Champs : Nom, Adresse, Entreprise.Secteur
   Filtre : Aucun
∘ Requête SQL
   SELECT Clients.Nom, Clients.Adresse, Entreprises.Secteur FROM Clients, Entreprises WHERE Clients. Entreprise = Entreprises.IdEnt

Pour le renvoi des Nom et Adresse des clients des sociétés dans le secteur du bâtiment :
∘ Requête saisie
   Table : Clients
   Champs : Nom, Adresse
   Filtre : Entreprise.Secteur = "Bâtiment"
∘ Requête SQL
   SELECT Clients.Nom, Clients.Adresse FROM Clients, Entreprises WHERE
   Clients. Entreprise = Entreprises.IdEnt AND Entreprises.Secteur = "Bâtiment"

Comme la relation entre les tables Entreprises et Clients est connue, il n'est pas nécessaire de rappeler explicitement la jointure entre ces tables et le module de conversion 18 assure l'ajout de la jointure "clients. Entreprise = Entreprises.IdEnt" grâce à la connaissance de la relation issue du modèle de données et de la connaissance du recours à la table secondaire Entreprises par la présence dans le filtre du terme "Entreprise.Secteur

Le langage SQL permet que les conditions utilisées comprennent des conditions imbriquées en ce sens que les conditions indiquées après l'opération WHERE comportent au moins un opérateur SELECT

Le module de saisie 16 et le module de conversion 18 comportent des moyens combinés de prise en compte de ces spécificités.

Plus précisément, selon l'invention, le format requis par le module de saisie prévoit qu'un filtre secondaire définissant une condition imbriquée dans une autre condition soit définie sous la forme d'un filtre mentionné entre deux accolades { . }.

Le module de conversion 18, lors de la détection d'un tel filtre secondaire reformule la condition grâce à l'opérateur SELECT dans la condition indiquée après l'opération WHERE, SELECT dans la condition indiquée après l'opération WHERE, en assurant une identification et un report dans la requête SQL de tables nécessaires à l'interrogation autres que la table privilégiée et des relations entre les champs des tables en cause.

Par ailleurs, le module de saisie 16 est propre à recevoir le nom explicite donné à une relation entre deux tables. Le module de conversion 18 est adapté pour indiquer explicitement la jointure correspondante à partir de la connaissance du modèle de données lors de la détection du nom explicite d'une relation dans une requête saisie.

Ainsi, le nom de la relation est utilisé dans le cas d'une relation 1 à plusieurs.

Pour le renvoi des Noms des clients qui ont réalisé au moins deux achats dont le prix de chacun des produits correspondants est supérieur à 100 :
∘ Requête saisie
   Table : Clients
   Champs : Nom
   Filtre : RefAchats.Count { Produit.Prix >=100} >= 2
∘ Requête SQL
   SELECT Nom FROM Clients WHERE (SELECT Count(*) FROM Achats, Produits WHERE Achats.Produit = Produits.IdProd AND Produits.Prix >= 100 AND Client = Clients.IdClient) >= 2.

Un filtre secondaire est saisi sous la forme {}. Il porte sur la table Achats et permet de préciser la méthode de comptabilisation des achats.

Le nom de la relation RefAchats est présent dans la requête saisie, ce qui conduit le module de conversion 18 à ajouter la table "Achats" et la condition "Client = Clients.IdClient" dans la requête SQL.

Pour le renvoi des Noms et Adresses des clients qui ont réalisé au moins un achat constitué d'au moins deux exemplaires d'un produit dont le prix est supérieur à 100 :
∘ Requête saisie
   Table : Clients
   Champs : Nom, Adresse
   Filtre : RefAchats.Quantité.Min {Produit.Prix>100} >= 2
∘ Requête SQL
   SELECT Clients.Nom, Clients.Adresse FROM Clients WHERE (SELECT Min(Achats.Quantité) FROM Achats, Produits WHERE Achats.Produit=Produits.IdProd AND Produits.Prix>100 AND Achats.Client = Clients.IdClient) >= 2

Cet exemple illustre la capacité à préciser le champ sur lequel portera le calcul dans la table secondaire en l'occurrence ici « Quantité » ainsi que le type de calcul souhaité (ici « minimum »).

Pour le renvoi des Nom et Adresse des clients qui ont réalisé au moins deux achats de produit dont le prix est supérieur à 100 et dont le secteur de l'entreprise est dans le bâtiment :
∘ Requête saisie
   Table : Clients
   Champs : Nom, Adresse
   Filtre : RefAchats.Count{ Produit.Prix >= 100 } >=2 AND Entreprise.Secteur = "Bâtiment".
∘ Requête SQL
   SELECT Clients.Nom, Clients.Adresse FROM Clients WHERE (SELECT Count(*) FROM Achats, Produits WHERE Achats.Produit=Produits.IdProd AND Produits.Prix >= 100 AND Achats.Client = Clients.IdClient) >= 2 AND Entreprise IN (SELECT IdEnt FROM Entreprises WHERE Secteur = "Bâtiment")

Comme l'illustre l'exemple ci-dessous il est également possible de généraliser la syntaxe « champsource.champdestination » à « champsource.champdestination1 ...champdestination(x) » avec champdestination(x) étant un champ dans la table destinataire du champ champdestination(x-1) et ainsi de soit extraire des champs soit de filtrer sur des champs n'étant pas immédiatement liés à la table privilégiée.

Ainsi, pour le renvoi de la liste des achats ainsi que le nom des clients correspondants et les quantités achetées pour tous les achats dont l'entreprise du client est dans le secteur du bâtiment :
∘ Requête saisie
   Table : Achats
   Champs : Produit, Client.Nom, Sum(Quantité)
   Filtre : Client.Entreprise.Secteur = "Bâtiment".
∘ Requête SQL
   SELECT Achats.Produit, Clients.Nom, Sum(Achats.Quantité) FROM Achats, Clients, Entreprises WHERE Achats.Client=Clients.IdClient AND Clients. Entreprise = Entreprises.IdEnt AND Entreprises.Secteur = "Bâtiment"

La syntaxe présentée dans l'exemple précédent peut ainsi également être généralisée pour inclure des références à des noms de relations « valeur multiple vers valeur multiple»

Ainsi pour le renvoi de la liste des personnes appartenant à des entreprises du secteur du bâtiment pour lesquels au moins deux clients ont réalisé des achats portant sur 4 produits valant plus de 100 :
∘ Requête saisie
   Table : Client
   Champs : Nom
   Filtre : Entreprise.RefClients.Count{ RefAchats.Count{ Quantité >= 4 AND Produit.Prix >= 100 } >= 2 } AND Entreprise.Secteur= "Bâtiment".
∘ Requête SQL
   SELECT Nom FROM Clients, Entreprises WHERE Clients.Entreprise = Entreprises.IdEntreprise AND (SELECT Count(*) From Clients AS Clients2 WHERE Entreprises.IdEntreprise=Clients2.Entreprise AND (SELECT IdClient FROM Achats, Produits WHERE Achats.Client = Clients2.IdClient AND Achats.Quantité > 4 AND Produits.Prix >= 100 AND Produits.IdProduit = Achats.Produit) >=2) AND Entreprises.Secteur = "Bâtiment").

On constate que la simplification du langage est obtenue sur la partie WHERE de la requête SQL et qu'elle est d'autant plus importante que lorsqu'il est nécessaire d'écrire de multiples sous-requêtes ou jointures en SQL.

Ainsi, on comprend que la simplification de la saisie et de l'interrogation de la base de données résultent des deux points suivants :
Un table et une seule table est choisie comme table privilégiée. Les écritures et significations de toutes les expressions sont dès lors simplifiées et interprétées grâce à ce principe et les tables non indiquées explicitement sont recueillies dans la base de données à partir de la connaissance du modèle de données et des relations qu'elle contient, permettant que le module de conversion réintègre les champs dans les requêtes SQL.

Il convient de noter que malgré l'existence de cette contrainte, il est possible de réaliser de très nombreuses requêtes, dans la mesure où le concept de table privilégié couvre la notion de table réelle mais également la notion de table virtuelle ou de Vue résultant d'une autre requête, notamment SQL ou formulée depuis le module de saisie dans le format initial.

Les références aux relations entre les champs de tables, faites à partir du nom donné aux relations permettent de simplifier la formulation des requêtes en utilisant des jointures implicites entre les tables, alors que la syntaxe du langage SQL ne permet pas d'intégrer dans les requêtes SQL de telles références puisque le langage SQL impose au contraire d'indiquer explicitement les jointures.

Ainsi, il est possible par deux moyens différents de filtrer des données sur la base d'informations contenues dans une autre table.

Le langage utilisé pour la saisie initiale est avantageusement enrichi pour traiter des cas plus complexes et offrir des écritures plus compactes et lisibles par rapport à des syntaxes SQL et le module de conversion est propre à assurer la conversion avec la syntaxe SQL.

Ainsi, par exemple, des ensembles de conditions cumulatives ou alternatives sont définis pour être convertis sous la forme de conditions successives séparées par ET ou OU.

En outre, il est possible d'enrichir le langage d'interrogation, en introduisant de nouveaux opérateurs eux même construits à partir de requêtes décrites avec les moyens d'interrogation décrits. Dans l'exemple ci-dessous, l'opérateur « similaire » est introduit qui permet d'identifier deux produits équivalents : deux produits X et Y sont jugés équivalents si l'identifiant d'un produit Y est présent dans le champ **Equivalent** d'un produit X.

La définition de l'opérateur SIMILAIRE s'écrit alors comme suit:
Opérateur : ?X SIMILAIRE ?Y
Table : Produit
Filtre : IdProd= ?X AND Equivalent= ?Y OR IdProd= ?Y AND Equivalent= ?X
   ∘ Requête SQL
      SELECT * FROM Produits WHERE IdProd=?X AND Equivalent=?Y OR IdProd=?Y AND Equivalent=?X

Les produits sont jugés équivalents si la requête ci-dessus renvoie au moins un enregistrement. Il est à noter que la partie Champs de la requête n'est pas renseignée, car pour définir un nouvel opérateur seul le fait que la requête puisse renvoyer au moins un enregistrement pour un couple ?X et ?Y donné est pertinent.

Une fois un tel opérateur défini on peut utiliser l'écriture suivante pour saisir la requête qui renvoie le nom des clients ainsi que les quantité achetées par des clients du secteur du bâtiment des produits similaires au produit "IdA":
∘ Requête saisie
   Table : Achats
   Champs : Nom.Client, Quantité
   Filtre : Produit SIMILAIRE "IdA" AND Client.Entreprise.Secteur = "Bâtiment"
∘ Requête SQL
   SELECT Clients.Nom, Achats.Quantité FROM Achats, Clients, Entreprises WHERE Achats.Client=Clients.IdClient AND
   Clients.Entreprise = Entreprises.IdEnt AND Entreprises.Secteur = "Bâtiment" AND EXISTS (SELECT * FROM Produits WHERE IdProd=Achats.Produit AND Equivalent="IdA" OR IdProd="IdA" AND Equivalent= Achats.Produit)

Dans le cas d'une définition d'un opérateur impliquant des champs provenant de plusieurs tables, le module de saisie et son module de conversion associé peuvent être utilisés pour prédéfinir à l'avance des schémas de jointures entre tables réutilisables, ce qui serait très difficile à mettre en place en SQL compte tenu de la complexité de sa syntaxe.

En outre, la description de l'opérateur pourrait être également être déduite d'une requête formulée directement en langage SQL selon une méthode similaire.

Enfin, il est possible d'utiliser ces moyens d'interrogation pour réaliser des modifications de données (par exemple modification de champs ou effacement d'enregistrements) sur un périmètre de données représenté par une requête exprimée dans le format de cette invention. Dans l'exemple ci-dessous la partie « Champs » n'a plus lieu d'être et est remplacée par « Action » qui décrit les changements de données attendus.

Pour le passage au statut « important » à tous les clients qui ont réalisé au moins deux achats de produit dont le prix est supérieur à 100 et dont le secteur de l'entreprise est dans le bâtiment :
∘ Requête saisie
   Table : Clients
   Action: Important = "Oui"
   Filtre : RefAchats.Count{ Produit.Prix >= 100 } >=2 AND Entreprise.Secteur = "Bâtiment".
∘ Requête SQL
   UPDATE Clients SET Important = "Oui" WHERE (SELECT Count(*) FROM Achats, Produits WHERE Achats.Produit=Produits.IdProd AND Produits.Prix >= 100 AND Achats.Client = Clients.IdClient) >= 2 AND Entreprise IN (SELECT IdEnt FROM Entreprises WHERE Secteur = "Bâtiment")

## Revendications

1. Procédé d'interrogation ou de modification d'une base de données comportant :
- plusieurs tables chacune avec des champs, et
- des relations entre les champs de tables différentes,
le procédé comportant les étapes de:
1) renseigner une unique table privilégiée;
2) renseigner au moins un champ d'une première table autre que l'unique table privilégiée, pour lequel des données sont recherchées ou à modifier ; et,
2') renseigner au moins un filtre portant sur un champ d'une seconde table autre que l'unique table privilégiée permettant la sélection des données recherchées ou à modifier, la seconde table pouvant être identique ou différente de la première table, ledit filtre comportant une condition imbriquée de filtrage, en ce sens que les conditions indiquées après l'opération WHERE comportent au moins un opérateur SELECT, la condition imbriquée de filtrage étant saisie comme des variables dudit filtre identifiées par une syntaxe prédéterminée ({.}), sans que lesdites variables ne comportent la mention explicite des jointures représentatives des relations entre les champs des différentes tables,
3) identifier dans la base de données, à partir des champs saisis et des champs figurant dans les filtres saisis, les tables contenant ces champs ;
4) identifier dans la base de données, à partir des champs saisis et des champs figurant dans les filtres saisis, les relations entre ces champs de tables différentes ;
5) reformuler une requête auprès de la base de données en mentionnant complètement :
- les champs pour lesquels des données sont recherchées ou à modifier,
- les tables identifiées contenant des champs saisis et / ou des champs figurant dans le filtre,
- des jointures représentatives des relations entre les champs des différentes tables
6) appliquer la requête à la base.

2. Procédé selon la revendication 1, caractérisé en ce la saisie de filtres permettant la sélection des données recherchées ne comporte pas la mention explicite des jointures représentatives des relations entre les champs de tables différentes.

3. Procédé selon la revendication 1 ou 2, **caractérisé en ce que** la reformulation de la requête est faite en langage SQL.

4. Procédé selon l'une quelconque des revendications précédentes, **caractérisé en ce que** la relation à une autre table est saisie implicitement dans un filtre en utilisant le nom d'un champ utilisé par la jointure dans le cas d'une relation « plusieurs vers 1 ».

5. Procédé selon la revendication 4, **caractérisé en ce que** la relation à une autre table est saisie dans le filtre en utilisant, pour désigner les champs d'une table autre que la table saisie, une formulation contenant la forme : champsource.champdestination où champsource est le champs de la table de départ et champdestination est le champs de la table d'arrivée dans le cas d'une relation « plusieurs à 1 ».

6. Procédé selon l'une quelconque des revendications précédentes, **caractérisé en ce que** la relation à une autre table est saisie dans le filtre en utilisant un nom préalablement affecté dans le modèle de données de la base de données à la relation dans le cas d'une relation « 1 à plusieurs ».

7. Procédé selon l'une quelconque des revendications précédentes, **caractérisé en ce que** le filtre comporte au moins un opérateur de comparaison de champs éventuellement combiné par des ET / OU.

8. Procédé selon l'une quelconque des revendications précédentes, **caractérisé en ce que** le filtre comporte au moins un opérateur de calcul sur un champ.

9. Procédé selon l'une des revendications précédentes, **caractérisé en ce que** le filtre comporte un nouvel opérateur permettant d'enrichir le langage d'interrogation, ledit nouvel opérateur étant préalablement défini en renseignant une table privilégiée et au moins un filtre.

10. Installation d'interrogation ou de modification d'une base de données comportant une base de données ayant :
- plusieurs tables chacune avec des champs, et
- des relations entre les champs de tables différentes,
l'installation comportant :
1) des moyens pour renseigner une unique table privilégiée;
2) des moyens pour renseigner au moins un champ d'une première table autre que l'unique table privilégiée, pour lequel des données sont recherchées ou à modifier ; et,
2') des moyens pour renseigner au moins un filtre portant sur un champ d'une seconde table autre que l'unique table privilégiée, permettant la sélection des données recherchées ou à modifier, la seconde table pouvant être identique ou différente de la première table, la seconde table pouvant être identique ou différente de la première table, ledit filtre comportant une condition imbriquée de filtrage, en ce sens que les conditions indiquées après l'opération WHERE comportent au moins un opérateur SELECT, la condition imbriquée de filtrage étant saisie comme des variables dudit filtre identifiées par une syntaxe prédéterminée ({.}), sans que lesdites variables ne comportent la mention explicite des jointures représentatives des relations entre les champs des différentes tables,
3) des moyens pour identifier dans la base de données, à partir des champs saisis et des champs figurant dans les filtres saisis, les tables contenant ces champs ;
4) des moyens pour identifier dans la base de données, à partir des champs saisis et des champs figurant dans les filtres saisis, les relations entre ces champs de tables différentes ;
5) des moyens pour reformuler une requête auprès de la base de données en mentionnant complètement :
- les champs pour lesquels des données sont recherchées ou à modifier,
- les tables identifiées contenant des champs saisis et / ou des champs figurant dans le filtre,
- des jointures représentatives des relations entre les champs des différentes tables
6) des moyens pour appliquer la requête à la base.

## Patentansprüche

1. Verfahren zum Abfragen oder Modifizieren einer Datenbank, umfassend:
- mehrere Tabellen, die jeweils Felder aufweisen, und
- Beziehungen zwischen den Feldern unterschiedlicher Tabellen,
wobei das Verfahren die Schritte umfasst:
1) Nachfragen einer einzelnen bevorzugten Tabelle;
2) Nachfragen mindestens eines Feldes einer ersten Tabelle, die eine andere als die einzelne bevorzugte Tabelle ist, für die Daten gesucht werden bzw. zu ändern sind; und
2') Nachfragen mindestens eines Filters, der ein Feld einer zweiten Tabelle, die eine andere ist als die einzelne bevorzugte Tabelle, betrifft, der das Auswählen der gesuchten bzw. zu ändernden Daten ermöglicht, wobei die zweite Tabelle identisch mit der ersten Tabelle oder auch eine andere sein kann, wobei der Filter eine verschachtelte Filterungsbedingung umfasst, in dem Sinne, dass die im Anschluss an die WHERE-Operation angegebenen Bedingungen mindestens einen SELECT-Operator umfassen, wobei die verschachtelte Filterungsbedingung als Variable des Filters erfasst wird, die mit einer vorgegebenen Syntax ({.}) gekennzeichnet sind, ohne dass die Variablen jeweilige Verbindungsstellen ausdrücklich nennen, die die Beziehungen zwischen den Feldern der verschiedenen Tabellen darstellen;
3) Identifizieren der Tabellen, die diese Felder enthalten, in der Datenbank anhand der erfassten Felder und der Felder, die in den erfassten Filtern enthalten sind;
4) Identifizieren der Beziehungen zwischen diesen Feldern von unterschiedlichen Tabellen in der Datenbank anhand der erfassten Felder und der Felder, die in den erfassten Filtern enthalten sind;
5) Umformulieren einer Anfrage an die Datenbank unter vollständiger Angabe von:
- den Feldern, für die Daten gesucht werden bzw. zu ändern sind,
- den identifizierten Tabellen, die erfasste Felder und/oder im Filter enthaltene Felder enthalten;
- den Verbindungsstellen, die die Beziehungen zwischen den Feldern der unterschiedlichen Tabellen darstellen;
6) Anwenden der Anfrage auf die Datenbank.

2. Verfahren nach Anspruch 1, **dadurch gekennzeichnet, dass** das Erfassen der Filter, die die Auswahl der gesuchten Daten ermöglichen, keine ausdrückliche Angabe der Verbindungsstellen enthält, die die Beziehungen zwischen den Feldern unterschiedlicher Tabellen darstellen.

3. Verfahren nach Anspruch 1 oder 2, **dadurch gekennzeichnet, dass** das Umformulieren der Anfrage in der SQL-Sprache erfolgt.

4. Verfahren nach einem der vorstehenden Ansprüche, **dadurch gekennzeichnet, dass** die Beziehung zu einer anderen Tabelle im Falle einer Mehrere-zu-Eins-Beziehung implizit in einem Filter unter Verwendung der Bezeichnung eines für die Verbindungsstelle verwendeten Felds erfasst wird .

5. Verfahren nach Anspruch 4, **dadurch gekennzeichnet, dass** die Beziehung zu einer anderen Tabelle im Filter dadurch erfasst wird, dass zur Kennzeichnung der Felder einer anderen als der erfassten Tabellen eine Formulierung verwendet wird, die die Form enthält: quellfeld.zielfeld, wobei im Falle einer Mehrere-zu-Eins-Beziehung quellfeld das Feld der Ausgangstabelle ist und zielfeld das Feld der Zieltabelle ist.

6. Verfahren nach einem der vorstehenden Ansprüche, **dadurch gekennzeichnet, dass** die Beziehung zu einer anderen Tabelle dadurch im Filter erfasst wird, dass eine Bezeichnung verwendet wird, die im Voraus der Beziehung im Falle einer Eins-zu-Mehreren-Beziehung im Datenmodell der Datenbank zugewiesen ist.

7. Verfahren nach einem der vorstehenden Ansprüche, **dadurch gekennzeichnet, dass** der Filter einen oder mehrere Feldvergleichsoperatoren umfasst, die ggf. durch UND/ODER kombiniert sind.

8. Verfahren nach einem der vorstehenden Ansprüche, **dadurch gekennzeichnet, dass** der Filter mindestens einen Rechenoperator auf einem Feld umfasst.

9. Verfahren nach einem der vorstehenden Ansprüche, **dadurch gekennzeichnet, dass** der Filter einen neuen Operator umfasst, der eine Anreicherung der Abfragesprache ermöglicht, wobei der neue Operator durch Nachfragen einer bevorzugten Tabelle und mindestens eines Filters vorgegeben wird.

10. Einrichtung zum Abfragen oder Modifizieren einer Datenbank, umfassend eine Datenbank mit:
- mehreren Tabellen, die jeweils Felder aufweisen, und
- Beziehungen zwischen den Feldern unterschiedlicher Tabellen,
wobei die Einrichtung umfasst:
1) Mittel zum Nachfragen einer einzelnen bevorzugten Tabelle;
2) Mittel zum Nachfragen mindestens eines Feldes einer ersten Tabelle, die eine andere als die einzelne bevorzugte Tabelle ist, für die Daten gesucht werden bzw. zu ändern sind; und
2') Mittel zum Nachfragen mindestens eines Filters, der ein Feld einer zweiten Tabelle, die eine andere ist als die einzelne bevorzugte Tabelle, betrifft, der das Auswählen der gesuchten bzw. zu ändernden Daten ermöglicht, wobei die zweite Tabelle identisch mit der ersten Tabelle oder auch eine andere sein kann, wobei die zweite Tabelle identisch mit der ersten Tabelle oder auch eine andere sein kann, wobei der Filter eine verschachtelte Filterungsbedingung umfasst, in dem Sinne, dass die im Anschluss an die WHERE-Operation angegebenen Bedingungen mindestens einen SELECT-Operator umfassen, wobei die verschachtelte Filterungsbedingung als Variable des Filters erfasst wird, die mit einer vorgegebenen Syntax ({.}) gekennzeichnet sind, ohne dass die Variablen jeweilige Verbindungsstellen ausdrücklich nennen, die die Beziehungen zwischen den Feldern der verschiedenen Tabellen darstellen;
3) Mittel zum Identifizieren der Tabellen, die diese Felder enthalten, in der Datenbank anhand der erfassten Felder und der Felder, die in den erfassten Filtern enthalten sind;
4) Mittel zum Identifizieren der Beziehungen zwischen diesen Feldern von unterschiedlichen Tabellen in der Datenbank anhand der erfassten Felder und der Felder, die in den erfassten Filtern enthalten sind;
5) Mittel zum Umformulieren einer Anfrage an die Datenbank unter vollständiger Angabe von:
- den Feldern, für die Daten gesucht werden bzw. zu ändern sind,
- den identifizierten Tabellen, die erfasste Felder und/oder im Filter enthaltene Felder enthalten;
- den Verbindungsstellen, die die Beziehungen zwischen den Feldern der unterschiedlichen Tabellen darstellen;
6) Mittel zum Anwenden der Anfrage auf die Datenbank.

## Claims

1. Method of interrogating or modifying a database comprising:
- a plurality of tables each with fields, and
- relationships between the fields of different tables,
the method comprising the steps of:
1) filling in a single privileged table;
2) filling in at least one field in a first table, different from the single privileged table, for which data are sought or to be modified; and,
2') filling in at least one filter pertaining to a field of a second table, different from the single privileged table, allowing the selection of the data sought or to be modified, the second table being able to be identical or different from the first table, said filter comprising a nested filtering condition, i.e. the conditions indicated after the WHERE operation comprise at least one SELECT operator, the nested filtering condition being filled in as a variable of said filter identified by a predetermined syntax ({.}), but the variable does not explicitly mention the joins representative of the relationships between the fields of the various tables;
3) identifying in the database, using the fields filled in and the fields appearing in the filters filled in, the tables containing these fields;
4) identifying in the database, using the fields filled in and the fields appearing in the filters filled in, the relationships between these fields of different tables;
5) reformulating a query to the database by stating in full:
- the fields for which data are sought or to be modified,
- the tables identified containing fields filled in and/or fields appearing in the filter,
- joins representative of relationships between the fields of different tables 6) applying the query to the database.

2. Method according to claim 1, **characterised in that** the filling in of filters allowing the data sought to be selected does not include the explicit mention of the joins representative of the relationships between the fields of the different tables.

3. Method according to either claim 1 or claim 2, **characterised in that** the query is reformulated in SQL.

4. Method according to any one of the preceding claims, **characterised in that** the relationship to another table is implicitly filled in in a filter by using the name of a field used by the join in the case of a "many to one" relationship.

5. Method according to claim 4, **characterised in that** the relationship to another table is input in the filter using a formulation containing the form: sourcefield.destinationfield to designate the fields in a table other than the table filled in, where sourcefield is the field in the source table and destinationfield is the field in the destination table in the case of a "many to one" relationship.

6. Method according to any one of the preceding claims, **characterised in that** the relationship to another table is filled in in the filter using a name previously assigned to the relationship in the database data model in the case of a "one to many" relationship.

7. Method according to any one of the preceding claims, **characterised in that** the filter comprises at least one field comparison operator, possiblycombined by AND / OR operators.

8. Method according to any one of the preceding claims, **characterised in that** the filter comprises at least one calculation operator on a field.

9. Method according to any one of the preceding claims, **characterised in that** the filter comprises a new operator for enriching the interrogation language, said new operator being defined beforehand by filling in a privileged table and at least one filter.

10. Installation for interrogating or modifying a database comprising a database with:
- a plurality of tables each with fields, and
- relationships between the fields of different tables,
the installation comprising:
1) means of filling in a single privileged table;
2) means of filling in at least one field in a first table, different from the single privileged table, for which data are sought or to be modified; and,
2') means of filling in at least one filter pertaining to a field of a second table, different from the single privileged table, allowing the selection of the data sought or to be modified , the second table being able to be identical or different from the first table, said filter comprising a nested filtering condition, i.e. the conditions indicated after the WHERE operation comprise at least one SELECT operator, the nested filtering condition being filled in as a variable of said filter identified by a predetermined syntax ({.}), but the variable does not explicitly mention the joins representative of the relationships between the fields of the various tables;
3) means of identifying in the database, using the fields filled in and the fields appearing in the filters filled in, the tables containing these fields;
4) means of identifying in the database, using the fields filled in and the fields appearing in the filters filled in, the relationships between these fields of different tables;
5) means of reformulating a query to the database by stating in full:
- the fields for which data are sought or to be modified,
- the tables identified containing fields filled in and/or fields appearing in the filter,
- joins representative of relationships between the fields of different tables
6) means of applying the query to the database.
